# EUROPEAN PATENT APPLICATION

(11) **EP 1 731 331 A2**
(43) Date of publication of application: **13.12.2006**
(21) Application number: 05717193.6
(22) Date of filing: 03.03.2005
(51) Int. Cl.: B60B 11/04, B60C 5/22

(54) **SAFETY WHEEL**

(30) Priority: 03.03.2004 ES 200400513
(71) Applicant: Sells Mocholi, José, 08031 Barcelona (ES)
(72) Inventor: Sells Mocholi, José, 08031 Barcelona (ES)
(74) Representative: Manresa Val, Manuel
(86) International application number: PCT/ES2005/000109
(87) International publication number: WO 2005/084105

(57) **Abstract**

The invention relates to a safety wheel comprising a cover (1) and a rim (2). The inventive wheel also comprises at least one membrane (10), all of the larger perimeter (11) of said membrane being connected to the inner part of the cover (1), such that said inner part is divided into at least two parts. In addition, the aforementioned rim (2) is divided into at least two portions, a first portion (21) and a second portion (22), which, when joined, define at least one cavity-forming space (23) in the rim, which is used to fix all of the smaller perimeter (12) of the membrane (10), such that at least two independent compartments (4, 5) are formed between the cover (1) and the rim (2)).

## Description

Safety wheel of the type that comprises a tyre and a rim of the type and in that it includes at least one membrane, flexible, united by all his greater perimeter to the inner part of the tyre, in such a way that it divides in at least two parts the internal part of the referred tyre, and the mentioned rim is divided in at least two portions, a first and a second, that when being united these portions, by fixation means, define at least a space in the rim as a cavity, for the fixation of all the smaller perimeter of the membrane, in such a way that are configured at least two compartments independent between the tyre and the rim characterized in that the smaller perimeter of the tyre ends in a head, being the surface of the alluded head of the smaller perimeter higher than the space, formed by the union of the two portions.

### BACKGROUNDS OF THE INVENTION

They are known in the state of the art different patents that they protect tyres and rims that define two independent receptacles, not connected to each other, to contain in their inner part a fluid, generally air.

Thus it is known the European Patent No. 0922592, of 1998, in the name of the firm PIRELLI PNEUMATICI SOCIETA PER AZIONI, that refers to a tyre wheel for vehicles that comprises a mounting rim which can be associated with a hub of a vehicle and is provided with two bead seats forming a cone, for engagement with corresponding beads of a tyre, with its apex on said axis of rotation in a position axially outside said rim, a tyre comprising a toroidal carcass provided with a crown portion connected to a pair of axially facing sidewalls terminating in beads for engagement with the corresponding bead seats formed on the rim, said tyre having its maximum width in the region of said beads, and an inner tube inserted into the toroidal cavity defined between tyre and rim, elastically expandable by means of the introduction of fluid under pressure into its internal volume, and provided with an inflating and deflating device inserted in the wall of said inner tube, without any element for connection to the environment outside the wheel, in particular passing through the wall of the rim.

In this patent it is very illustrative the figure 1 in which the existence of two independent compartments can be clearly appreciated, as a chambers, for the introduction of the fluid, existing some elements foreseen to inflate both compartments. Also the claim 23rd refers to an embodiment that indicates that the inner tube comprises at least two inner circumferential volumes, separated by a longitudinal wall, extended in a perpendicular plane to the rotation axis of the wheel, each volume being provided with an inflation device.

For all the above stated it is a first tube (inner tube) that is located between the tyre and the rim and that has two independent volumes.

Also it is in the state of the art the Spanish Patent 9102617 (ES2051178), in the name of Mr. Yasushi Ozaki, filing on 1991; this invention relates to a combination of multiple tires disposed adjacently parallel to each other on a single wheel, respective inner spaces of the multiple tires being communicated with each other by way of an airflow piping. The airflow piping comprises a pneumatic pressure control valve which can be opened or closed due to an air-leaking condition of the multiple tires. When one of the multiple tires leaks air rapidly, the pneumatic pressure of the other normal tire is also decreased, thereby allowing the driver to notice the puncture. If the former leaks air slowly, its air is supplied by the latter, respective pneumatic pressures are going to become equal, thereby the driver can drive for a certain time and be free from any serious accident that may occur when he is unaware of the puncture.

It is also known the Spanish Utility Model No. 8803328 (ES1008496), in the name of Mr. José AMESTOY LAFUENTE, of 1988, that refers to a safety pneumatic wheel, non-deflatable, characterized in that it includes a plurality of partitions in radial direction, as well as other cross-sectional partitions, by means of which they form in the pressure chamber, a series of independent housings, being also foreseen that there is at least an intermediate coaxial partition in respect to the chamber, of arched surface that forms housings to different radial distance, as well as a portion of annular chamber equipped with the general valve of pneumatic inflation, next to the rim, and by means of which it can pass the air from inflation to the different housings through the respective existing valves in the dividing wall from the portion of the annular chamber and contiguous housings from equal radial distance, as well as in the dividing wall defined by the intermediate coaxial partition, everything in order to in the case that there is a puncture, only the pressure of the corresponding housing is lost.

Thus, it is known the French Patent No. 2608514, in the name of Mr. Salah BENSALEM, of 1986, that relates to a device which, in the case of a puncture, makes it possible to lose only half the quantity of air in the air chamber, allowing the motorist to drive with a tyre without damage in the deflated state and to be put back into normal service after repair. The air chamber 1 is divided into two compartments 2 by a partition which has symmetry with respect to a longitudinal median plane.

Finally also it is necessary to include in the backgrounds of the invention the following patents GB2298400, DE3200926, JP07-156602, DE4200735, US3161219, US2641295, AU5393679 and US3791432.

### BRIEF DESCRIPTION OF THE INVENTION

The present invention is a considerable advance in the sector of the wheels for vehicles, in reference to the tires as well as in reference to the rims, since it increases the benefits of safety at the moment of the puncture, when someone is driving at high speed.

The patents previously mentioned can be set in two groups, a first group that consists of the air transmission from a compartment to another one in case of puncture, in order to balance the air between the two parts of the wheel, as it is explained in the Spanish Patent No. 9102617 (ES2051178), and a second group in which the other three are included, that refers to the fact that independent compartments exist in such a way that puncture in one of the compartments does not affect to the others.

The Spanish Patent n° 9102617 (ES2051178) has two disadvantages: from one side, in the case of a blowout (it means, not a simple puncture), the lost of air would suppose the immediate transmission of air to the other side with the danger to remain almost immediately without air in both sides, specially if it is circulated at high speed and in a curve.

On the other hand it does not solve the loss of control of the vehicle, since when transmitting air to the zone that loses air, simultaneously is making lose adhesion to the part of the wheel that it has, reason why soon the wheel will have a lack of adhesion and it will be unrimmed.

For that reason, the best solution corresponds to those of the second group before mentioned, where the present invention would be fitted.

The solution of the Spanish Utility Model No. 8803328 (ES1008496) although is a very useful idea, supposes a practically nonviable investment in costs. Creating a tire with multitude of housings, with valves to allow their load, gives a product very expensive, and economically nonviable.

In connection to the French Patent of Mr. Bensalem, it is only explained an idea but without developing it. So and as he explains is practically unfeasible, or he would have to go to the idea of the Patent of Mr. Ozaki, being united two tyres, but it would suppose that the wheel would have an enormous size and the oil costs for the driver would increase.

In relation to the Patent of Pirelli, the present invention separates of that idea. Pirelli has created a chamber within the tyre between the tyre and the rim, with two independent compartments. What it is not clear it is how they solve the matter of the unrim, at the moment of the puncture, in the zone of the receptacle without air.

It is an object of the present invention a safety wheel of the type that comprises a tyre and a rim of the type and in that it includes at least one membrane, flexible, united by all his greater perimeter to the inner part of the tyre, in such a way that it divides in at least two parts the internal part of the referred tyre, and the mentioned rim is divided in at least two portions, a first and a second, that when being united these portions, by fixation means, define at least a space in the rim as a cavity, for the fixation of all the smaller perimeter of the membrane, in such a way that are configured at least two compartments independent between the tyre and the rim characterized in that the smaller perimeter of the tyre ends in a head, being the surface of the alluded head of the smaller perimeter higher than the space, formed by the union of the two portions.

Thus in this application, the inventor has created a new wheel, based on a tyre that is united to a rim by means of one or several inner membranes, with a certain flexibility, that they form two or more compartments, which allows to the wheel to adapt quickly to the lack of air in the other side of the tyre.

One of the greater advantages of this safety wheel consists of the fact that in the case of puncture the wheel hardly loses diameter, with which thing it is not unrimmed and in addition the driver can keep the control.

It supposes that the vehicle, once has taken place the puncture, can continue driving, at a lower speed, until it can arrive to a service in order to have the puncture to be repaired.

Another one of the advantages of the present invention consists of by means of simple union means, the rim can be opened in different portions, the membranes become free, and the tyre can be removed, consequently repairing the puncture.

At the same time, thanks to the self-centering devices, it is very easy to assemble, with no need of special machines, being able to do it any person of the street.

In addition the tyre is fitted by centring devices of the rim, and by the inner part, by means of membranes, said tyre being retained by the rim, which guarantees that the wheel cannot be unrimmed.

To the membrane, which is made of flexible configuration, a cross-sectional cut has been produced, to partially divide it in two halves, and so it is allowed that the membrane has a double deformation.

In reference to the means of union of the portions of the rim, for example screws, they do not support the load; only press the membrane to tighten it. The load is supported by the before mentioned centring devices of the rim.

It has been included some sensors of air level, in order to control at any moment the lost of air inside the tyres.

To all the advantages previously enumerated, there are the following ones:
a/ easy to use it, any user can replace it,
b/ low maintenance cost,
c/ adaptability to the existing tyres at the present time by means of the union to this tyre of the membrane by retreading, adhesive, etc., and
d/ low production cost for the manufacturers.

### BRIEF DESCRIPTION OF THE DRAWINGS

With the purpose to facilitate the explanation eleven sheets of drawings are attached to the present description, in which a practical case of an embodiment has been reproduced, which is mentioned only for exemplificative, non limitative of the scope of the present invention:
- Figure 1 is a perspective view of the tyre.
- Figure 2 is a frontal view of the rim that belongs to the object of the present invention.
- Figure 3 is a perspective view of one of the portions of the rim that includes the projection.
- Figure 4 is a lateral view of figure 3.
- Figure 5 is an upper view of figure 3.
- Figure 6 is a perspective view of the other of the portions of the rim that includes the cavity.
- Figure 7 is a lateral view of figure 7.
- Figure 8 is an upper view of figure 6.
- Figure 9 is a view of the union of the two portions of the rim with the membrane but having it removed the tyre.
- Figure 10 is a partial section cut of a wheel already assembled.
- Figure 11 is a view of figure 10 but when the puncture or blowout in the tyre has been produced.
- Figure 12 is a partial section cut of a wheel with three compartments.
- Figure 13 is a detail of the portion of union for the wheels with three compartments, and
- Figure 14 is a total section cut of a wheel object of the present invention.

### PREFERRED EMBODIMENT OF THE PATENT APPLICATION

Thus in figure 1 it is shown a tyre 1, a membrane 10, its inner perimeter 18 and smaller perimeter 12 of the membrane.

In figure 2 a rim 2, divided in a first portion 21 and a second portion 22, a first flange 29, a second flange 30 or circular sector and a space 23 for the membrane.

In figure 3 one of the portions with a projection 24 has been drawn, the first flange 29 and the second flange 30 or circular sector.

The mentioned first flange 29, the second flange 30 or circular sector and the projection 24 have shown in figure 4.

In figure 5 the second flange 29 has been illustrated.

In figure 6 the other of the portions with a cavity 25 is seen, the first flange 29 and the second flange 30 or circular sector.

The mentioned first flange 29 and the second flange 30 or circular sector has been reproduced in figure 7.

In figure 8 the second flange 29 has been shown.

Figure 9 has represented the membrane 10, between the two portions 21,22, and two first flanges 29.

In figure 10 it has been drawn the tyre 1, with both compartments 4,5, rim 2, membrane 10 and its cut 13, projection 24, cavity 25, projections 70, means of fixation 26, the axis 31 of the wheel and means for inflation 32.

In figure 11 has been shown a head 15 of membrane 10, its cavity 25, a cut 13 and a space 23 defined by the first 21 and second 22 portions of the rim and its projections 70.

In figure 12 it is shown the tyre 1, compartments 4,5,6, the first 21, second 22 and third 27 portions of the rim 2, the means of fixation 26, the projections 24, the cavities 25, the projections 70, and the axis of wheel 31.

The third portion 27 of the rim, with its cavities 25 and the axis of wheel 31 has been shown in figure 13.

Finally, in figure 14 the tyre 1 has been drawn, the rim 2, the flanges 29, the compartments 4.5, and the heads 15 of the membrane 10.

Thus in a concrete embodiment, initially there is the tyre 1, as it is shown in figure 1, and the rim as it is represented in figure 2.

The two portions 21,22 of the rim are separated (figures 3 and 6) placing the head 15 of the membrane 10 in the space 23 that is defined by both portions when close.

Later both portions 21,22 are united, by means of the self-centering device, consisting on that one of the portions incorporates a projection 24, of circumferential shape, that fits in a cavity 25, faced to said projection 24, and also circumferential. So the rim is already fitted, being used means of fixation 26, to press the membrane 10 and to tighten it.

In addition the first flange 29 and the second flange 30 or circular sector, which act to avoid the unrim of the wheel in case of puncture, help to fix the tyre 1, since the inner perimeter of tyre 18 fits in second flange 30 or circular sector.

As it was indicated the wheel is formed by the tyre 1 and the rim 2 in where the membrane 10 is united by all its greater perimeter 11 to the inner part of the tyre 1, so that it divides in two parts the inner part of the referred tyre, and also the mentioned rim 2 is divided in two portions, the first 21 and the second 22, that when being united these portions, by means of fixation 26, they define at least a space 23 in the rim as a cavity, so and as it has been explained previously for the fixation of all the smaller perimeter 12 of the membrane 10, in such a way that two independent compartments 4,5 are formed between the tyre 1 and the rim 2.

The membrane 10 is flexible to allow a certain deformation towards the side of puncture but at the same time to keep the integrity of the compartment that is whole, that is not punctured. This membrane also can be formed by a piece, as it is show in figure 12 or can be cut, with a cut 13 that begins from the smaller perimeter 12 of the tyre, as it is shown in figures 10 and 11.

Smaller perimeter 12 of the tyre ends in a head 15 and in addition it is possible to configure it in such a way that the diameter of the referred the head 15 of the smaller perimeter is higher than the diameter of the space 23, formed by the union of two portions 21,22. With it is obtained that the own head becomes watertight as a consequence of the suffered press and needs to occupy everything or a great part of the space 23.

This head that can be configured on circular way, spherical, cubical, etc, is trapped in addition by the projections 70, located in the space 23 that punctures it without perforating it, in such a way that they help its immobilization, and ant the same time they force that the volume of the head 15 expands towards the rest of the space 23.

Since it has been indicated previously, the referred two portions 21,22 of the rim 2, include a self-centering device that is defined as a cylindrical piece, dividing, with a base that acts as closure of the chambers that form, and as support-axis of the weight of the vehicle, by means of the enclave of the cavity 25 with the projections 24 of the portions of previous and later rim before mentioned.

Projection 24 consists of a circumferential protuberance and in the same way that cavity 25 that one also adopts the circumferential configuration, although also could be made with multiple protuberances and cavities.

Preferably the projection 24 is located in the portion together with the axis 31 of the wheel.

With reference to the means of fixation 26, in this embodiment it has been decided on screws. It is necessary to remark that the function that they have is to press the head 15 of the membrane. In fact those are not the ones that support the load, but that is the self-centering device.

In order to facilitate the understanding of the possibility of forming multi-compartments, it has been represented figure 12.

Thus it is possible to observe that this embodiment includes two membranes 10,14, united both by all the perimeter of the two greater perimeters 11,17 to the inner part of the tyre 1, so that they divide in three parts the internal part of the referred tyre, and the mentioned rim 2 is divided in three portions, a first one 21, a second one 22 and a third one 27 intermediate, that when being united these portions, by means of fixation 26, define two spaces 23,28 in the rim as cavities, for the fixation of all the length of both smaller perimeters 12,16 of membranes 10,14, in such a way that three compartments 4,5,6 independents to each others, are formed between the tyre 1 and the rim 2.

Three portions 21,22,27 of the rim 2, incorporate a self-centering device consisting on two projections 24 located in the first 21 and second 22 portions that face to individual cavities 25 located in the intermediate portion 27, in such a way that in order to selfcenter the referred projections are introduced, in the cavities 25.

Projections 24 consist of circumferential protuberances as well as cavities 25 are circumferential cavities in this concrete embodiment although they could well be conical, for cases in that the rims reach high temperatures (for example in Formula 1).

So and as it is observed in figures 12 and 13 it is in the intermediate portion 27 where the axis 31 of the wheel is joint.

Like in the example of two compartments, for this example the referred rim incorporates a centring device, associated to the portions 21,22,27 of the wheel, in where both inner perimeters 18 of the tyre fit.

Thus, also the installation of a centring device of the tyre has been foreseen, that it avoids that the tyre 1 unrims, in other words, that the tyre 1 can leave the inner part of the rim at the moment that the puncture takes place.

It consists of a first flange 29 and a second flange 30 or circular sector, fixed by the inner part of the rim to said first flange 29, having said to second flange 30 an inferior diameter to the one of the first flange and whose outer perimeter coincides with the inner perimeter 18 of the tyre, fitting itself therefore said tyre 1 in the second flange 30.

Each one of the compartments 21,22 include means of independent inflation 32, in such a way that each compartment also is independent in the moment of the inflation, without air transmission from a compartment to another one (different than the Patent of Mr. Ozaki).

Finally, and in order to increase the safety measures, it has been foreseen the installation of sensors (not illustrated in the drawings) to detect the leaks in the compartments 21,22.

In the case of puncture, figure 11, the air would leave the inner part of compartment 4, the intermediate membrane 10, due to the leaks would be curved to try to occupy the space of compartment 4, the centring device of the tyre would avoid the unrim since the tyre cannot leave the rim, and membrane 10 would keep the compartment 5 with air, which supposes that the diameter of the tyre is not lost totally, only partially, which allows to continue circulating until the following area on to repair the puncture.

The present patent describes a new safety wheel. The examples mentioned here are not limitatives of the present invention, for that reason it will be able to have different applications and/or be adapted, all of them within the scope of the following claims.

In order to facilitate the understanding and the guidance of the description a numerical legend is as follows:
- 1.: Tyre
- 2.: Rim
- 4.: Compartment
- 5.: Compartment
- 10.: Membrane
- 11.: Greater Perimeter
- 12.: Smaller Perimeter
- 13.: Cut
- 14.: Membrane
- 15.: Head
- 16.: Second greater perimeter
- 17.: Second smaller perimeter
- 18.: Inner Perimeter
- 21.: First portion
- 22.: Second portion
- 23.: Space
- 24.: Projection
- 25.: Cavity
- 26.: Means of fixation - screws
- 27.: Third portion
- 28.: Space
- 29.: First flange
- 30.: Second flange
- 31.: Axis of the wheel
- 32.: Means of inflation
- 70.: Projections

## Claims

1. - Safety wheel of the type that comprises a tyre (1) and a rim (2) of the type and in that:
- it includes at least one membrane (10), flexible, united by all his greater perimeter (11) to the inner part of the tyre (1), in such a way that it divides in at least two parts the internal part of the referred tyre, and
- the mentioned rim (2) is divided in at least two portions, a first (21) and a second (22), that when being united these portions, by fixation means (26), define at least a space (23) in the rim as a cavity, for the fixation of all the smaller perimeter (12) of the membrane (10),
In such a way that are configured at least two compartments (4, 5) independent between the tyre (1) and the rim (2) **characterized in that** the smaller perimeter (12) of the tyre ends in a head (15), being the surface of the alluded head (15) of the smaller perimeter higher than the space (23), formed by the union of the two portions (21,22).

2. - Safety wheel in accordance to claim 1 **characterized in that** the membrane (10) is formed by a single piece.

3. - Safety wheel in accordance to claim 1 **characterized in that** the membrane (10) is cut, with a cut (13) that begins from the smaller perimeter (12) of the tyre.

4. - Safety wheel in accordance to claim 1 **characterized in that** the referred two portions (21, 22) of the rim (2), incorporate a self-centering device that is defined as a cylindrical piece, divider, with a base that acts as a closure of the chambers that conform, and as support-axis of the weight of the vehicle, by means of the enclave of the cavity (25) with the projections (24) of the portions of the previous and later rim before mentioned.

5. - Safety wheel in accordance to claim 4 **characterized in that** the projection (24) consists of a circumferential protuberance.

6. - Safety wheel in accordance to claim 5 **characterized in that** the cavity (25) is a circumferential cavity.

7. - Safety wheel in accordance to claim 4 **characterized in that** the projection (24) consists of a conical protuberance.

8. - Safety wheel in accordance to claim 5 **characterized in that** the cavity (25) is a conical cavity.

9. - Safety wheel in accordance to claim 5 or 7 **characterized in that** the projection (24) is located in the portion united to the axis (31) of the wheel.

10. - Safety wheel in accordance to some of the previous claims
**characterized in that**
- it includes two membranes (10, 14) joined with both by all the perimeter of the greater perimeters (11,17) to the inner part of the tyre (1), in such a way that they divide in three parts the internal part of the referred tyre, and
- the mentioned rim (2) is divided in three portions, a first (21), a second (22) and a third (27), intermediate, that when being united these portions, by fixation means (26), define two spaces (23,28) in the rim as cavities, for the fixation of all the length of both smaller perimeters (12,16) of the membranes (10,14),
In such a way that three compartments (4, 5, 6) independent between the tyre (1) and the rim are formed (2).

11. - Safety wheel in accordance to claim 10 **characterized in that** the three portions (21, 22, 27) of the rim (2), include a self-centering device that includes two projections (24) located in the first (21) and second (22) portions that face to said individual cavities (25) located in the intermediate portion (27), in such a way that in order to self-centre the projections are introduced in the cavities (25).

12. - Safety wheel in accordance to claim 11 **characterized in that** the projections (24) consist of circumferential protuberances.

13. - Safety wheel in accordance to claim 12 **characterized in that** the cavities (25) are circumferential cavities.

14. - Safety wheel in accordance to claim 11 **characterized in that** the projections (24) consist of circumferential protuberances.

15. - Safety wheel in accordance to claim 14 **characterized in that** the cavities (25) are conical cavities.

16. - Safety wheel in accordance to claim 11 **characterized in that** the intermediate portion (27) is joint to the axis (31) of the wheel.

17. - Safety wheel in accordance to some of the previous claims **characterized in that** the referred rim includes a centring device, associated to the portions (21,22) of the wheel, in where they both internal perimeters (18) of the tyre fit.

18. - Safety wheel in accordance to claim 17 **characterized in that** the centring device of the tyre consists of a first flange (29) and a second flange (30) or circular sector, fixed by the inner part of the rim to said first flange (29), having said second flange (30) an inferior diameter to the one of the first flange and whose outer perimeter coincides with the inner perimeter (18) of the tyre, fixing therefore this tyre (1) to the second flange (30).

19. - Safety wheel in accordance to claim 1 **characterized in that** it has been foreseen in the space (23) projections (70) so that when introducing the head (15) in the interior of the referred space, these projections (70) stick in the head without perforating it.
